# EUROPÄISCHE PATENTSCHRIFT

(11) **EP 3 559 941 B1**
(45) Veröffentlichungstag und Bekanntmachung des Hinweises auf die Patenterteilung: **04.08.2021**
(21) Anmeldenummer: 17822657.7
(22) Anmeldetag: 19.12.2017
(51) Int. Cl.: G10L 13/00, G10L 13/033, G10L 15/22, G06F 3/16

(54) **SPRACHAUSGABESTIMME EINES SPRACHBEDIENSYSTEMS**
AUDIO RESPONSE VOICE OF A VOICE CONTROL SYSTEM
TIMBRE D'UNE VOIX ÉMISE PAR UN SYSTÈME À COMMANDE VOCALE

(30) Priorität: 22.12.2016 DE 102016015352; 03.11.2017 DE 102017219596
(43) Veröffentlichungstag der Anmeldung: 30.10.2019
(73) Patentinhaber: VOLKSWAGEN AKTIENGESELLSCHAFT, 38440 Wolfsburg (DE)
(72) Erfinder: PLESCHKA, Mark, 10781 Berlin (DE); KOUSIDIS, Spyros, 10553 Berlin (DE); VARGES, Sebastian, 10715 Berlin (DE); WOLZE, Zeno, 12159 Berlin (DE); CEDZIWODA, Kim Maurice, 10115 Berlin (DE)
(86) Internationale Anmeldenummer: PCT/EP2017/083675
(87) Internationale Veröffentlichungsnummer: WO 2018/115036

(56) Entgegenhaltungen:
- DE-A1-102013 108 627
- US-A1- 2012 265 533
- US-A1- 2016 293 168

## Beschreibung

Die Erfindung betrifft ein Verfahren zum Betreiben eines Sprachbediensystems gemäß dem Oberbegriff des Anspruchs 1 sowie ein entsprechendes Sprachbediensystem gemäß dem Oberbegriff des Anspruchs 6.

Bekannt sind Sprachbediensysteme zur sprachgesteuerten Kommunikation eines Nutzers mit einer zu steuernden Einrichtung, welche schalterlos durch das Sprechen eines Aktivierungskommandos, sogenannte Wake-up-Words, aktiviert werden können. Das vom Nutzer gesprochene Aktivierungskommando, beispielsweise das Kommando "Computer", überführt das Sprachbediensystem vom Ruhezustand oder Standby-Zustand in den Bereitschaftszustand und kann durch den Nutzer gegebenenfalls selbst eingestellt und geändert werden.

Bei einem frei vom Nutzer konfigurierbaren Aktivierungskommando kann es folglich vorkommen, dass das voreingestellte Geschlecht der Systemausgabestimme nicht zum Geschlecht des Aktivierungskommandos passt, was zu Irritierungen führen kann, wie das folgenden Beispiel zeigt:
- das Aktivierungswort "Alexander" ergibt eine weibliche Systemausgabestimme, oder
- das Aktivierungswort "Vanessa"" ergibt eine männliche Systemausgabestimme. Wenn ein solcher Fall eintritt, der Nutzer also das Kommando "Hallo Vanessa" sagt und das System mit einer männlicher Stimme antwortet, so kann dies seitens des Nutzers als Fehler wahrgenommen werden und das System sozusagen "dumm" wirken.

Mit dem im Vorangegangenen geschilderten Fall kann wie folgt umgegangen werden. Falls das Geschlecht der Systemausgabestimme dem Nutzer nicht zusagt, so kann die Ausgabestimme manuell durch den Nutzer umgestellt werden, was beispielsweise in den Systemeinstellungen des Sprachbediensystems erfolgen kann.

Die erfordert jedoch Bedienungsaufwand seitens des Nutzers, um Geschlecht von Aktivierungskommando und Systemausgebastimme aneinander anzupassen.

Die Druckschrift DE 10 2013 108 627 B4 beschreibt ein sprachgesteuertes Kommunikationssystem umfassend ein Gerät mit einer Spracheingabeeinheit und Sprachausgabeeinheit und wenigstens eine zentrale Rechnereinheit, wobei das Gerät Mittel zur Datenübertragung aufweist. Mit der Spracheingabe- und Ausgabeeinheit erfolgt eine Sprachsteuerung für auf dem Gerät implementierte Funktionen, welche unabhängig von den Positionen und/oder fest an das Gerät gekoppelten Ein-/Ausgabeeinheiten sind, wobei die Spracheingabeeinheit ein Sprachüberwachungsmittel umfasst, das unabhängig von dem Betriebszustand der Spracheingabe- und Ausgabeeinheit und der Rechnereinheit betreibbar ist. Bei der Detektion zumindest eines vorbestimmbaren Sprachbefehls kann eine Aktivierung des Gerätes erfolgen, wobei das Sprachüberwachungsmittel an einer Energieversorgung einer Stromquelle angeschlossen ist, die separat von der Energieversorgung des Kommunikationssystems ist.

Die Druckschrift EP 1 074 017 B1 beschreibt ein Verfahren zum Bereitstellen einer Sprachbenutzeroberfläche mit Kennungsprofil, wobei das Verfahren folgendes umfasst:
- Ausführen einer Sprachbenutzeroberfläche, die erste Sprachsignale ausgibt, wobei die Sprachbenutzeroberfläche Sprachsignale erkennt, und
- Steuern der Sprachbenutzeroberfläche, um der Sprachbenutzeroberfläche ein Kennungsprofil auf der Basis erkannter Stimmensignale zu geben.

Die Druckschrift US 2016/293168 A1 beschreibt ein Verfahren zum Betreiben eines Sprachbediensystems mit vorbestimmtem Aktivierungskommando, wobei der Benutzer zwischen männlichen und weiblichen Sprachausgabestimmen wählen kann.

Die Druckschrift US 2012/265533 A1 beschreibt ein System zur akustischen Wiedergabe von EMails mittels Sprachsynthese, wobei die Sprachausgabestimme des Sprachsynthesesystems auf Basis eines zuvor detektierten Sprechergeschlechts adaptiert. Das Sprechergeschlecht wird auf Basis des E-Mail-Absenders bestimmt.

Der Erfindung liegt daher die Aufgabe zugrunde, ein Sprachbediensystem mit einer Systemstimme bereitzustellen, bei dem die Anpassung der Systemstimme an das Aktivierungskommando für den Nutzer auf einfache Weise erfolgt.

Diese Aufgabe wird durch ein Verfahren mit den Merkmalen den Anspruchs 1 sowie durch ein Sprachbediensystem mit den Merkmalen des Anspruchs 6 gelöst. Bevorzugte Ausgestaltungen der Erfindung sind Gegenstand der Unteransprüche.

Erfindungsgemäß erfolgt eine automatische Anpassung der Sprachausgabestimme auf Basis des Wortgeschlechts eines in dem neuen Aktivierungskommando enthaltenen Aktivierungsworts sowie die Übernahme des neuen Aktivierungskommandos, so dass der Nutzer zur Einstellung der Sprachausgabestimme nicht gezwungen ist in die Systemeinstellungen des Sprachbediensystems einzusteigen.

Dadurch verringert sich der Bedienungsaufwand für den Nutzer und im Fahrzeug wird das Risiko der Fahrerablenkung verringert. Zudem wird vermieden, dass die Sprachausgabestimme nicht zum Geschlecht des Aktivierungskommandos passt und das System wirkt dadurch intelligenter.

Eine bevorzugte Ausführungsform der Erfindung wird anhand der Zeichnungen erläutert. Dabei zeigt
Fig. 1 das Verfahren zur Anpassung der Sprachausgabe in schematischer Darstellung, und
Fig. 2 die entsprechende Vorrichtung zur Durchführung des Verfahrens.

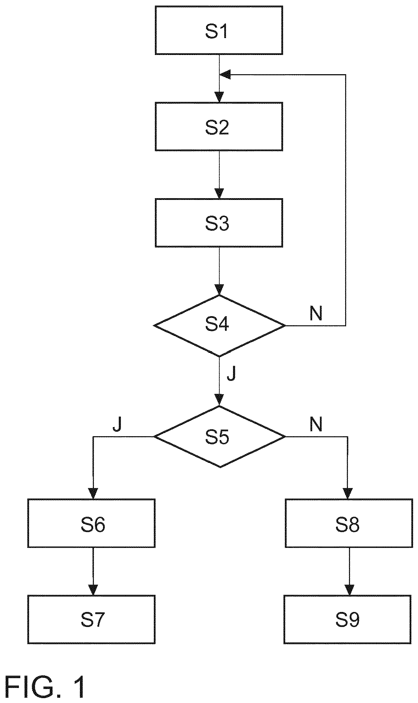

Fig. 1 zeigt in schematischer Darstellung das Verfahren zur Anpassung der Sprachausgabe an ein neues Aktivierungskommando eines Sprachbediensystems, wobei die Kommunikation des Verfahrens auf der sprachlichen Ebene erfolgt. Es ist auch möglich, dass einige Schritte des Verfahrens zur Sicherheit auf manueller Basis erfolgen können.

Im ersten Schritt S1 wird seitens eines Nutzers des Sprachbediensystem die Änderung des Aktivierungskommandos initiiert. Diese Initiierung kann über eine entsprechende manuelle Eingabe oder mittels eines geeigneten Sprachbefehls an das bereits aktivierte Sprachbediensystem erfolgen.

Im zweiten Schritt S2 wird seitens des Sprachbediensystems vorzugsweise per Sprachausgabe mit der derzeitigen Sprachausgabeeinstellung der Nutzer zur Eingabe des neuen Aktivierungskommandos aufgefordert. Nach der Aufforderung zur Eingabe des neuen Kommandos im Schritt S2 durch das Sprachbediensystem gibt der Nutzer im dritten Schritt S3 das neue Aktivierungskommando in das Sprachbediensystem ein. Die Eingabe erfolgt ebenfalls seitens des Nutzers in verbaler Weise.

Der Schritt S3 kann wiederholbar ausgestaltet sein. So ist es möglich, dass nach der ersten Eingabe des neuen Aktivierungskommandos im nachfolgenden Schritt S4 abgefragt wird, ob die Eingabe des neuen Aktivierungskommandos in Ordnung ist und/oder ob die Anzahl der Eingaben des neuen Aktivierungskommandos eine vorgegebene Anzahl erreicht hat, also ob das neue Aktivierungskommando beispielsweise bereits zweimal eingegeben wurde. Ist dies nicht der Fall, so geht das Verfahren wieder zurück zum zweiten Schritt S2 und fordert den Nutzer erneut zur Eingabe des neuen Aktivierungskommandos auf.

Wurde im Schritt S4 festgestellt, dass die Eingabe des neuen Aktivierungskommandos seitens des Nutzers den Anforderungen gerecht wurde, so geht das Verfahren entlang dem J-Kanal über zum Schritt S5, in welchem das Wortgeschlecht, d.h. der Genus, eines in dem neuen Aktivierungskommando enthaltenen Aktivierungsworts überprüft wird. Ergibt die Überprüfung, dass das Wortgeschlecht eindeutig weiblich oder eindeutig männlich ist, so geht das Verfahren entlang des J-Kanals über zum Schritt S6, in welchem das Geschlecht der Sprachausgabestimme entsprechend dem ermittelten Wortgeschlecht festgelegt wird. Gleichzeitig wird das bisherige Aktivierungskommando durch das neue Aktivierungskommando ersetzt. Mit anderen Worten, ist der Genus des in dem Aktivierungskommando enthaltenen Aktivierungsworts weiblich, so verwendet das Sprachbediensystem ab der Umstellung eine weibliche Sprachausgabestimme. Ist hingegen der Genus des in dem Aktivierungskommando enthaltenen Aktivierungsworts eindeutig männlich, so wird eine männliche Sprachausgabestimme nach der erfolgreichen Umstellung eingesetzt.

Im nachfolgenden Schritt S7 wird dem Nutzer mit der neu festgelegten Sprachausgabestimme durch das Sprachbediensystem mitgeteilt, dass das Änderung des Aktivierungskommandos erfolgreich war.

Ist hingegen das Ergebnis der Bestimmung des Wortgeschlechts im Schritt S5 nicht eindeutig weiblich oder eindeutig männlich, beispielsweise wenn das Wortgeschlecht ein Neutrum ist oder das Wortgeschlecht nicht eindeutig erkennbar ist, so wird im Schritt S8 die bisherige Sprachausgabestimme beibehalten und das bisherige Aktivierungskommando durch das neue Aktivierungskommando ersetzt.

Im nachfolgenden Schritt S9 wird dem Nutzer mit der bisherigen Sprachausgabestimme durch das Sprachbediensystem mitgeteilt, dass die Änderung des Aktivierungskommandos erfolgreich war.

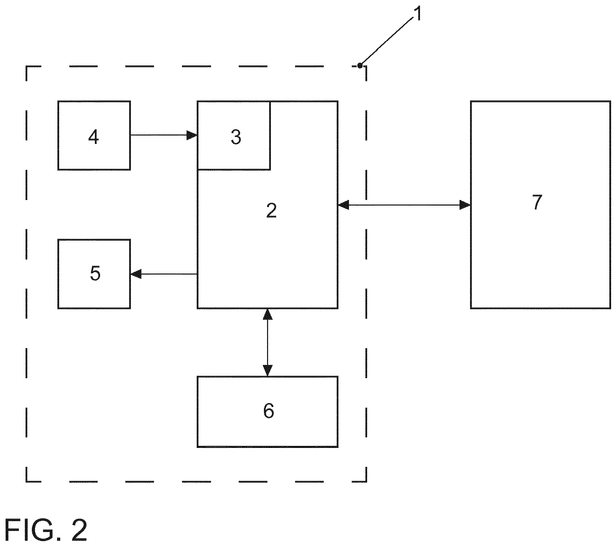

Fig. 2 zeigt in schematischer Darstellung eine bevorzugte Ausführungsform eines Sprachbediensystems 1, welches eine Steuerungseinrichtung 2 zur Steuerung und Verarbeitung einer Spracheingabe 4 und einer Sprachausgabe 5 umfasst. In der Steuerungseinrichtung 2 wird unter anderem festgelegt, welche Sprachausgabestimme die Sprachausgabe 5 einsetzt. Ferner ist eine Aktivierungseinrichtung 3 integraler Bestandteil der Steuerungseinrichtung 2, wobei mittels der Aktivierungseinrichtung 3 das Sprachbediensystem 1 aus dem Ruhezustand in einen aktiven Zustand versetzt wird.

Ferner umfasst die Sprachbedieneinrichtung 1 einen Identifizierer 6 zur Identifizierung des Wortgeschlechts eines in einem Aktivierungskommando enthaltenen Aktivierungsworts, falls seitens eines Nutzers ein neues Aktivierungskommando verwendet werden soll. Dabei kann der Nutzer natürlich auch das bisherige Aktivierungskommando verwenden, wenn er nur die Sprachausgabestimme geändert haben möchte. Ist beispielsweise das Wortgeschlecht des in dem bisherigen Aktivierungskommando enthaltenen Aktivierungsworts weiblich und die aktuelle Sprachausgabestimme männlich, so bewirkt die Eingabe des bisherigen Aktivierungskommando eine Änderung der Sprachausgabestimme.

Das Sprachbediensystem wird also um eine zusätzliche Komponente, nämlich den Identifizierer 6 erweitert, die als Softwarekomponente im Sinne eines "Gender-Identifier" das Geschlecht eines Namens bestimmen kann. Diese neue Komponente, nämlich der Identifizierer 6, kann beispielsweise eine Datenbank mit Namen und zugehörigen Geschlechtern umfassen und darauf zugreifen und/oder einen regelbasierten oder statistischen Klassifikator beinhalten. Weiter kann der Identifizierer 6 im Infotainmentsystem eingebettet im Sinne von "embedded" oder auf einem Server implementiert sein. Wenn ein neues Aktivierungskommando im Sprachbediensystem 1 eingestellt wird, fragt das System über die Schnittstelle zum "Gender-Identifier" 6 das Geschlecht des in dem neuen Aktivierungskommando enthaltenen Wortes ab. Wenn eine eindeutige Zuordnung des Namens zu "männlich" oder zu "weiblich" erhalten wurde, wird die Sprachausgabestimme automatisch auf das passende Geschlecht umgestellt. Wenn keine eindeutige Zuordnung besteht, wird das Geschlecht der Sprachausgabestimme nicht umgestellt.

### Bezugszeichenliste

- S1: Aufforderung zur Änderung des Aktivierungskommandos
- S2: Anforderung neues Aktivierungskommando seitens des Sprachbediensystems
- S3: Eingabe neues Aktivierungskommando
- S4: Wiederholung der Eingabe
- S5: Abprüfen des Wortgeschlechts des Aktivierungskommandos
- S6: Anpassen der Sprachausgabe an das im Schritt S4 ermittelte Geschlecht und Festlegen des neuen Aktivierungskommandos
- S7: Ausgabe "Änderung Aktivierungskommando erfolgreich" mit neuer Sprachausgabe
- S8: Beibehalten der bisherigen Sprachausgabe und Festlegen des neuen Aktivierungskommandos
- S9: Ausgabe "Änderung Aktivierungskommando erfolgreich" mit bisheriger Sprachausgabe

- 1: Sprachbediensystem
- 2: Steuerung und Verarbeitung
- 3: Aktivierungseinrichtung
- 4: Spracheingabe
- 5: Sprachausgabe
- 6: Wortgeschlecht-Identifizierer
- 7: mit dem Sprachbediensystem zu steuerndes Gerät

## Patentansprüche

1. Verfahren zum Betreiben eines Sprachbediensystems (1), mit den Schritten:
- Anforderung einer Änderung eines Aktivierungskommandos seitens des Nutzers;
- Eingabe des neuen Aktivierungskommandos seitens des Nutzers;
- Übernehmen des neuen Aktivierungskommandos;
**und den kennzeichnenden Schritten:**
- Bestimmen des Wortgeschlechts eines in dem neuen Aktivierungskommando enthaltenen Aktivierungsworts;
- Festlegen der Sprachausgabestimme entsprechend dem Wortgeschlecht, falls das Wortgeschlecht eindeutig männlich oder eindeutig weiblich ist; und
- Beibehalten der bisherigen Sprachausgabestimme, falls das Wortgeschlecht nicht eindeutig männlich und nicht eindeutig weiblich ist.

2. Verfahren nach Anspruch 1, **dadurch gekennzeichnet, dass** die Eingabe des neuen Aktivierungskommandos auf Aufforderung des Sprachbediensystems erfolgt.

3. Verfahren nach Anspruch 2, **dadurch gekennzeichnet, dass** die Aufforderung zur Eingabe des neuen Aktivierungskommandos mindestens zweimal erfolgt.

4. Verfahren nach einem der vorangegangenen Ansprüche, **dadurch gekennzeichnet, dass** die Bestimmung des Wortgeschlechts des in dem neuen Aktivierungskommando enthaltenen Aktivierungsworts anhand der Inhalte einer Datenbank und/oder durch einen Klassifikator erfolgt.

5. Verfahren nach Anspruch 4, **dadurch gekennzeichnet, dass** der Klassifikator regelbasiert oder statistisch ist.

6. Sprachbediensystem (1) mit einer Steuerungseinrichtung (2), einer Aktivierungseinrichtung (3), einer Spracheingabeeinheit (4) und einer Sprachausgabeeinheit (5), wobei das Sprachbediensystem (1) zur Durchführung des Verfahrens nach einem der vorangegangenen Ansprüche eingerichtet und ausgelegt ist und eine Einrichtung (6) zur Bestimmung des Wortgeschlechts eines in einem neuen Aktivierungskommando enthaltenen Aktivierungsworts aufweist.

7. Sprachbediensystem nach Anspruch 6, **dadurch gekennzeichnet, dass** die Einrichtung (6) zur Bestimmung des Wortgeschlechts das Wortgeschlecht des in dem neuen Aktivierungskommando enthaltenen Aktivierungsworts anhand der Inhalte einer Datenbank und/oder durch einen Klassifikator bestimmt.

8. Sprachbediensystem nach Anspruch 7, **dadurch gekennzeichnet, dass** der Klassifikator der Einrichtung (6) zur Bestimmung des Wortgeschlechts regelbasiert oder statistisch ist.

## Claims

1. Method for operating a voice control system (1), having the steps of:
- the user requesting a change of activation command;
- the user inputting the new activation command;
- accepting the new activation command;
and the characterizing steps of:
- determining the word gender of an activation word included in the new activation command;
- stipulating the voice output voice according to the word gender if the word gender is explicitly masculine or explicitly feminine; and
- retaining the previous voice output voice if the word gender is not explicitly masculine and not explicitly feminine.

2. Method according to Claim 1, **characterized in that** the new activation command is input at the request of the voice control system.

3. Method according to Claim 2, **characterized in that** the request to input the new activation command is made at least twice.

4. Method according to one of the preceding claims, **characterized in that** the word gender of the activation word included in the new activation command is determined on the basis of the content of a database and/or by means of a classifier.

5. Method according to Claim 4, **characterized in that** the classifier is rule based or statistical.

6. Voice control system (1) having a control device (2), an activation device (3), a voice input unit (4) and a voice output unit (5),
wherein the voice control system (1) is configured and designed to perform the method according to one of the preceding claims and has a device (6) for determining the word gender of an activation word included in a new activation command.

7. Voice control system according to Claim 6, **characterized in that** the device (6) for determining the word gender determines the word gender of the activation word included in the new activation command on the basis of the content of a database and/or by means of a classifier.

8. Voice control system according to Claim 7, **characterized in that** the classifier of the device (6) for determining the word gender is rule based or statistical.

## Revendications

1. Procédé permettant de faire fonctionner un système à commande vocale (1), comprenant les étapes consistant à :
- demander une modification d'un ordre d'activation de la part de l'utilisateur ;
- entrer le nouvel ordre d'activation de la part de l'utilisateur ;
- adopter le nouvel ordre d'activation ;
et les étapes caractérisantes consistant à :
- déterminer le genre d'un mot d'activation contenu dans le nouvel ordre d'activation ;
- définir la voix de sortie vocale selon le genre du mot, si le genre du mot est clairement masculin ou clairement féminin ; et
- conserver la voix de sortie vocale précédente si le genre du mot n'est pas clairement masculin et n'est pas clairement féminin.

2. Procédé selon la revendication 1, **caractérisé en ce que** l'entrée du nouvel ordre d'activation est effectuée à la demande du système à commande vocale.

3. Procédé selon la revendication 2, **caractérisé en ce que** la demande d'entrée du nouvel ordre d'activation est effectuée au moins deux fois.

4. Procédé selon l'une quelconque des revendications précédentes, **caractérisé en ce que** la détermination du genre du mot d'activation contenu dans le nouvel ordre d'activation est effectuée à l'aide du contenu d'une base de données et/ou par un classificateur.

5. Procédé selon la revendication 4, **caractérisé en ce que** le classificateur est basé sur des règles ou est de type statistique.

6. Système à commande vocale (1), comprenant un dispositif de commande (2), un dispositif d'activation (3), une unité d'entrée vocale (4) et une unité de sortie vocale (5),
le système à commande vocale (1) étant aménagé et conçu pour effectuer le procédé selon l'une quelconque des revendications précédentes et présentant un dispositif (6) permettant de déterminer le genre d'un mot d'activation contenu dans un nouvel ordre d'activation.

7. Système à commande vocale selon la revendication 6, **caractérisé en ce que** le dispositif (6) permettant de déterminer le genre d'un mot détermine le genre du mot d'activation contenu dans le nouvel ordre d'activation à l'aide du contenu d'une base de données et/ou par un classificateur.

8. Système à commande vocale selon la revendication 7, **caractérisé en ce que** le classificateur du dispositif (6) permettant de déterminer le genre d'un mot est basé sur des règles ou est de type statistique.
